# EUROPÄISCHE PATENTSCHRIFT

(11) **EP 2 399 441 B1**
(45) Veröffentlichungstag und Bekanntmachung des Hinweises auf die Patenterteilung: **13.04.2016**
(21) Anmeldenummer: 10174504.0
(22) Anmeldetag: 30.08.2010
(51) Int. Cl.: A01B 59/04, A01D 41/16, F16L 37/18, F16L 37/16, A01B 59/00, B60D 1/64, F16L 37/56

(54) **Kupplung zum Verbinden von Hydraulikleitungen**
Coupling for combining hydraulic lines
Accouplement destiné à relier des conduites hydrauliques

(30) Priorität: 30.11.2009 DE 102009056071
(43) Veröffentlichungstag der Anmeldung: 28.12.2011
(73) Patentinhaber: CLAAS Industrietechnik GmbH, 33106 Paderborn (DE)
(72) Erfinder: Fedde, Thomas, 33129, Delbrück (DE)

(56) Entgegenhaltungen:
- WO-A1-2004/031637
- DE-U1- 9 209 060
- FR-A- 1 411 596
- FR-A1- 2 645 242
- FR-A1- 2 745 043

## Beschreibung

Die Erfindung betrifft eine Kupplung zum Verbinden von Hydraulikleitungen nach dem Oberbegriff des Anspruchs 1.

Aus der DE 44 12 115 ist eine Kupplung zum Verbinden von Hydraulikleitungen bekannt geworden, deren Kupplungsteile in der Arretierposition über mechanische Verriegelungselemente miteinander fixiert sind. Derartige Kupplungssysteme werden in der Regel bei der Koppelung von Vorsatzgeräten mit landwirtschaftlichen Erntemaschinen, etwa Mähdreschern oder Feldhäckslern, eingesetzt. Aufgrund dessen, dass sich bei derartigen Fahrzeugsystemen das adaptierte Arbeitsgerät in Fahrrichtung voraus und im Sichtbereich des Fahrers des Trägerfahrzeugs befindet, kann dieser ohne weiteres erkennen, wenn nach einem Abkoppelvorgang die Verbindung der Hydraulikleitungen zwischen Trägerfahrzeug und adaptierten Arbeitsgerät nicht getrennt wurden, sodass ein Abreißen der Schlauchverbindung in der Regel nicht auftritt. Zudem wird das Arbeitsgerät währende des Betriebes vom Trägerfahrzeug geschoben, sodass sich anders als beispielsweise bei heckseitig an Trägerfahrzeugen, wie etwa Traktoren, angeordneten Arbeitsgeräten beim Abreißen von mechanischen Verriegelungseinrichtungen adaptiertes Gerät und landwirtschaftlicher Erntemaschine nicht voneinander entfernen.

Wird eine Kupplungseinrichtung nach der DE 44 12 115 bei der Koppelung von landwirtschaftlichen Arbeitsgeräten mit einem Trägerfahrzeug, wie etwa einem Traktor eingesetzt, besteht sowohl im Zugbetrieb als auch bei der Abkoppelung heckseitig oder seitlich adaptierter Arbeitsgeräte, das Problem, dass sich die Arbeitsgeräte nicht im Sichtbereich des Fahrers des Trägerfahrzeugs befinden und dieser nicht erkennen kann, wenn das Trägerfahrzeug im Betreib durch Bruch von Arretiervorrichtung das adaptierte Gerät verliert oder beim Abkoppelvorgang die Hydraulikverbindungen nicht gelöst wurden. In beiden Fällen kann es zum Ab- oder Zerreißen der Hydraulikschläuche kommen, was neben Beschädigungen an den Schläuchen selbst ein erhebliches Verletzungsrisiko für Personen birgt, die sich im Einflussbereich der Schlauchleitungen befinden.

Aus der FR 2 645 242 ist ferner eine Kupplungsvorrichtung bekannt geworden, deren Kupplungselement ebenfalls über eine sogenannte Einführhilfe mit einem Kupplungsgegenstück verbindbar ist, wobei die als Fixierstift ausgeführte Einkuppelhilfe im eingekuppelten Zustand die Kupplungselemente nicht freigibt. Eine derartige Ausführung hat insbesondere den Nachteil, dass die Kupplung bei zu hohen Kupplungskräften nicht selbstständig entkuppeln kann. Würde eine derartige Kupplung zur Verbindung von Hydraulikschläuchen eingesetzt hätte dies zur Folge, dass bei zu hohen Zugkräften die Schlauchleitung reist, was zur Zerstörung der Schlauleitung, einem hohen Verletzungsrisiko und zu unnötigem Ölverlust führt.

Es ist deshalb Aufgabe der Erfindung die beschriebenen Nachteile des Standes der Technik zu vermeiden und insbesondere eine Kupplung zum Verbinden von Hydraulikleitungen vorzuschlagen, die einerseits im normalen Arbeitsbetrieb eine sichere Verbindung der Hydraulikanschlüsse zwischen Trägerfahrzeug und adaptierten Gerät sicherstellt, andererseits aber auch beim Erreichen von unzulässigen Schlauchbelastungen ein Lösen der Schlauverbindungen ermöglicht.

Diese Aufgabe wird erfindungsgemäß durch die kennzeichnenden Merkmale des Anspruchs 1 gelöst.

Indem die Kupplung zum Verbinden von Hydraulikleitungen ein erstes, mit dem Trägerfahrzeug verbundenes Kupplungsteil und ein mit dem ersten Kupplungsteil verbindbares zweites Kupplungsteil, eine dem ersten Kupplungsteil zugeordnete Arretiervorrichtung und zumindest einen dem zweiten Kupplungsteil zugeordneten, mit der Arretiervorrichtung in Eingriff bringbaren Fixierstift umfasst und der zumindest eine Fixierstift während der Kupplung des ersten und zweiten Kupplungsteils in einer der Arretiervorrichtung zugeordneten Kurvenbahn geführt und in der Arretierposition von dieser freigegeben wird, wird sichergestellt, dass die Kupplung beim Erreichen von unzulässigen Schlauchbelastungen ein Lösen der Schlauverbindungen ermöglicht und der Koppelvorgang zugleich schnell und präzise ausgeführt werden kann.

In einer vorteilhaften Ausgestaltung der Erfindung wird das positionsgenaue Koppeln der Kupplungsteile auf konstruktiv einfache Weise gelöst, wenn dem zweiten Kupplungsteil ein oder mehrere Positionierbolzen zugeordnet sind, die mit Aufnahmebohrungen des ersten Kupplungsteils derart zusammenwirken, dass das das zweite Kupplungsteil mittels der Positionierbolzen in dem ersten Kupplungsteil geführt wird.

Indem schließlich die der Arretiervorrichtung zugeordnete Kurvenbahn einen kurvenförmigen Führungsbereich und einen linearen Freigabebereich umfasst, wird auf konstruktiv einfache Weise sichergestellt, dass der Koppelvorgang selbst optimal unterstützt wird und ohne weitere, vom Bediener durchzuführende Maßnahmen, die Arretierposition erreicht wird, die bei Überschreitung von Belastungsgrenzen automatisch die Kupplung öffnet.

In einer vorteilhaften Ausgestaltung der Erfindung wird die sichere Führung des Fixierstift in der Kurvenbahn dann erreicht, wenn die Kurvenbahn als einseitig geöffnetes, einen Führungskanal bildendes U-Profil ausgestaltet ist.

Eine besonders einfache Handhabung der Kupplungsvorrichtung ergibt sich in einer weiteren vorteilhaften Ausgestaltung der Erfindung dann, wenn die Arretiervorrichtung zur Auslösung des Arretiervorganges und zum Lösen der ersten und zweiten Kupplungsteile mittels Handhebel von der Entriegelungsposition in die Arretierposition und umgekehrt verschwenkbar ist.

In einer vorteilhaften Weiterbildung der Erfindung umfasst die Arretiervorrichtung erste und zweite Verriegelungsflansche, wobei jeder Verriegelungsflansch eine Kurvenbahn aufnimmt und einem Seitenbereich des ersten Kupplungsteils drehbar zugeordnet ist und jeweils mit einem den Seitenbereichen des zweiten Kupplungsteils zugeordneten Fixierstift in Wirkverbindung bringbar ist. Eine derartige Ausgestaltung hat vor allem den Vorteil, dass eine kompakte, wenig Bauraum benötigenden Kupplung geschaffen wird, die in einen nur begrenzt zur Verfügung stehenden Bauraum optimal integrierbar ist.

Eine hohe Flexibilität bezüglich der Art der mittels der erfindungsgemäßen Kupplung an ein Trägerfahrzeug adaptierbaren Arbeitsgeräte ergibt sich dann, wenn die ersten und zweiten Kupplungsteile eine Vielzahl von Schlauchleitungen aufnehmen können.

Eine sichere und konstruktiv einfach ausgeführte Abstützung des zweiten Kupplungsteils an dem ersten Kupplungsteil wird dann erreicht, wenn die Schlauchleitungen über Hydraulikanschlüsse mit dem zweiten Kupplungsteil verbundnen sind und diese Hydraulikanschlüsse mit den dem ersten Kupplungsteil zugeordneten Steckkupplungen gekoppelt werden.

Damit zudem sichergestellt ist, dass die einzelnen Schlauchleitungen nicht separat von der Kupplung getrennt werden ist in einer vorteilhaften Ausgestaltung der Erfindung vorgesehen, dass die Haltekraft jeder Schlauchkupplung so dimensioniert ist, dass sie größer als die Lösekraft des zweiten Kupplungsteils vom ersten Kupplungsteil ist.

Damit beispielsweise bei Straßenfahrt und im Arbeitsbetrieb des Trägerfahrzeugs mit adaptierten Arbeitsgerät sichergestellt ist, dass sich die Kupplung nicht durch fahrgeschwindigkeits-bedingte Stoßbelastungen öffnet ist in einer weiteren vorteilhaften Ausgestaltung der Erfindung vorgesehen, dass zumindest einem der Verriegelungsflansche der Arretiervorrichtung in der Arretierposition ein Sicherungsstift zugeordnet ist.

Damit die Kupplung mit wenigen Handgriffen händisch entriegelbar ist, ist in einer weiteren vorteilhaften Ausgestaltung der Erfindung vorgesehen, dass der Sicherungsstift entfernbar an der Kupplung angeordnet ist.

Das Einsatzspektrum der erfindungsgemäßen Kupplung kann dadurch beträchtlich erhöht werden, wenn das Trägerfahrzeug als land- oder forstwirtschaftliches Trägerfahrzeug, vorzugsweise Traktor, ausgeführt ist und das zweite Kupplungsteil einem mit dem land- oder forstwirtschaftlichen Trägerfahrzeug koppelbaren Arbeitsgerät zugeordnet ist. Dieser Effekt ergibt sich in analoger Weise, wenn das Trägerfahrzeug als Baumaschine ausgeführt und das zweite Kupplungsteil einem mit der Baumaschine koppelbaren Arbeitsgerät zugeordnet ist.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: ein als Traktor ausgeführtes und die erfindungsgemäße Kupplung umfassendes Trägerfahrzeug
- Figur 2: eine schematische Detailansicht der Erfindungsgemäßen Kupplung
- Figur 3: eine schematische Darstellung des erfindungsgemäßen Kuppelvorgangs

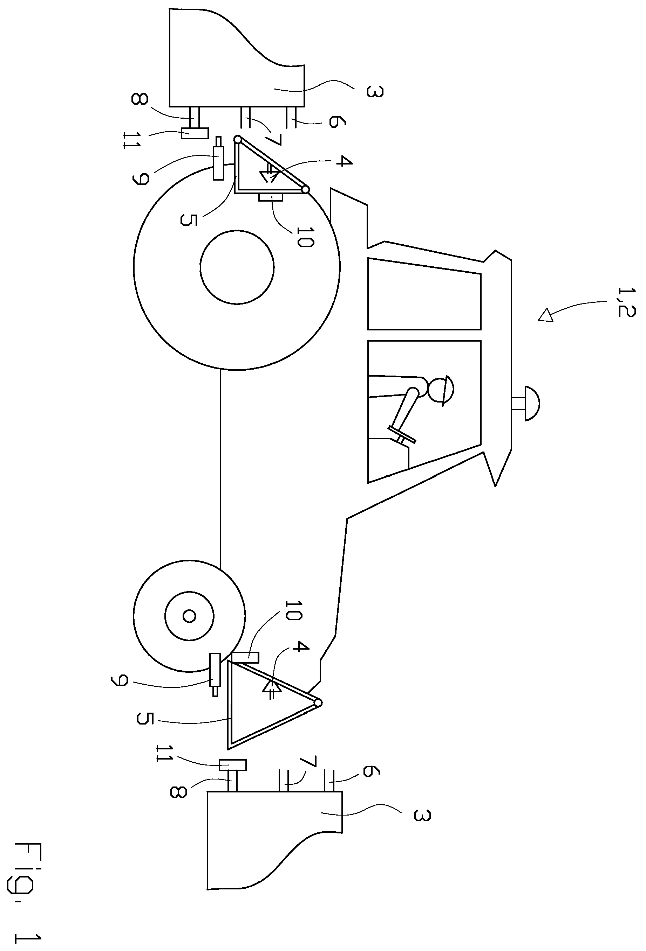

Figur 1 zeigt ein als Traktor 2 ausgeführtes Trägerfahrzeug 1, welches in seinem rückwärtigen Bereich in an sich bekannter Weise ein landwirtschaftliches Arbeitsgerät 3, wie etwa einen Pflug, eine Heuwerbungsmaschine oder ein Mähwerk aufnimmt. In analoger Weise kann ein landwirtschaftliches Arbeitsgerät 3 auch im Front- und/oder Seitenbereich des landwirtschaftlichen Trägerfahrzeugs 1 an dieses adaptiert sein. In der Regel kann das landwirtschaftliche Arbeitsgerät 3 entweder über ein sogenanntes Zugmaul 4 oder den Dreipunktanbau 5 von dem Traktor 2 aufgenommen werden, wobei das landwirtschaftliche Trägerfahrzeug 1 je nach Ausstattungsgrad front- und/oder heckseitig über ein Zugmaul 4 und einen entsprechenden Dreipunktanbau 5 verfügen kann. Die an das Trägerfahrzeug 1 zu adaptierenden Arbeitsgeräte 3 führen verschiedenste Arbeitsfunktionen aus, wobei die zur Durchführung dieser Arbeitsfunktionen erforderlichen Arbeitsorgane der Arbeitsgeräte 3 hydraulisch und/oder elektrisch und/oder mechanisch angetrieben werden und die jeweils erforderliche Antriebsenergie über Versorgungsstränge 6-8 von dem jeweiligen Trägerfahrzeug 1 bereitgestellt werden. In an sich bekannter Weise kann dabei die Übertragung mechanischer Antriebsenergie über eine Kopplung eines arbeitsgeräteseitigen Antriebsstranges 6 mit der jeweiligen Zapfwelle 9 des Trägerfahrzeugs 1 bewirkt werden. Elektrische Energie wird in der Regel mittels elektrischer Leitungen 7 zwischen Trägerfahrzeug 1 und Arbeitsgerät 3 übertragen. Hydraulische Antriebsenergie wird in der Regel über Hydraulikleitungen 8 zwischen einem Trägerfahrzeug 1 und dem oder den ihm zugeordneten Arbeitsgeräten 3 übertragen. Zur Vereinfachung des Koppelvorganges der Hydraulikleitungen 8 mit dem Trägerfahrzeug 1 verfügt das Trägerfahrzeug 1 über ein erstes, in Figur 1 nur schematisch gezeigtes, mit dem Trägerfahrzeug 1 drehfest verbundenes Kupplungsteil 10 welches mit einem dem Arbeitsgerät 3 zugeordneten zweiten, alle Hydraulikleitungen 8 des Arbeitsgerätes 3 aufnehmenden Kupplungsteil 11 gekoppelt werden kann, wobei die ersten und zweiten Kupplungsteile 10, 11 die nachfolgend näher zu erläuternde erfindungsgemäße Kupplung 12 zum Verbinden von Hydraulikleitungen 8 bilden.

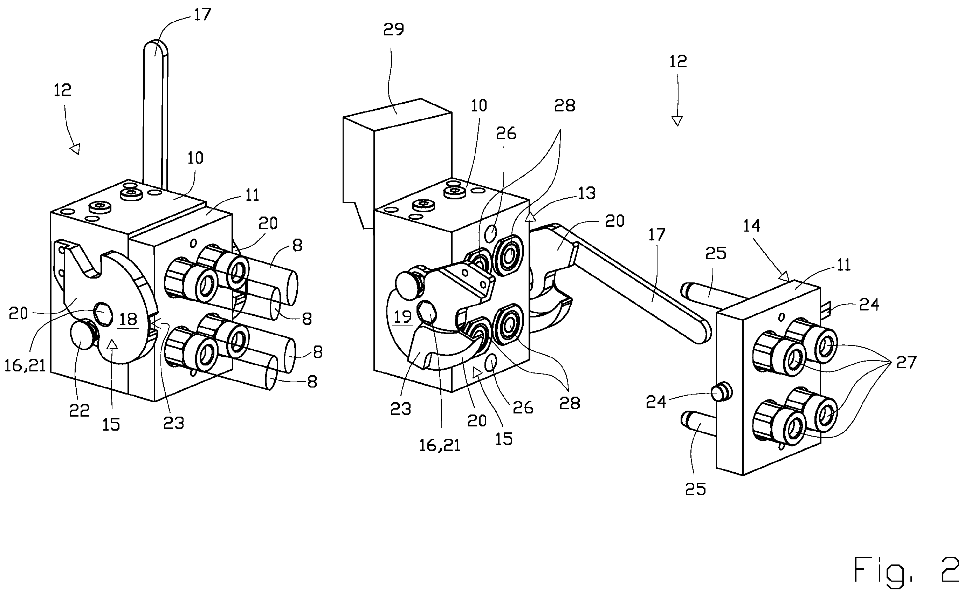

Figur 2 zeigt die erfindungsgemäße Kupplung 12 in der linken Darstellung in geschlossenem und in der rechten Darstellung in geöffnetem Zustand. Die ersten und zweiten Kupplungsteile 10, 11 liegen im geschlossenen Zustand mit ihren innenseitigen Flanschflächen 13, 14 unmittelbar aufeinander. Dem ersten Kupplungsteil 10 ist in erfindungsgemäßer Weise eine Arretiervorrichtung 15 zugeordnet, die um eine sich quer zur Kupplung 12 erstreckende Schwenkachse 16 mittels eines Handhebels 17 von einer Arretierposition 18 in eine Entriegelungsposition 19 geschwenkt werden kann. Die Arretiervorrichtung 15 umfasst beidseitig dem ersten Kupplungsteil 10 zugeordnete Verriegelungsflansche 20, die mittels Schraubverbindungen 21 auf der Schwenkachse 16 der Arretiervorrichtung 15 befestigt sind. Zudem nimmt einer der Verriegelungsflansche 20 den Handhebel 17 lösbar auf. Damit sich die in der Arretierposition 18 befindenden ersten und zweiten Kupplungsteile 10, 11 der Kupplung 12 beispielsweise beim Straßentransport des landwirtschaftlichen Trägerfahrzeugs 1 nicht durch auftretende Stoßbelastungen voneinander lösen, nimmt das erste Kupplungsteil 10 einen Sicherungsstift 22 entfernbar auf, der zumindest teilweise formschlüssig von dem ihm zugeordneten Arretierflansch 20 umgriffen wird, sodass bei eingesetztem Sicherungsstift 22 ein Verdrehen der Kupplungsteile 10, 11 gegeneinander und damit ein Öffnen der Kupplung 20 nicht möglich ist. Jedem Verriegelungsflansch 20 ist zudem auf seiner den Kupplungsteilen 10, 11 zugewandten Seite in erfindungsgemäßer Weise eine Kurvenbahn 23 zugeordnete, die in noch näher zu beschreibender Weise mit beidseitig dem zweiten Kupplungsteil 11 zugeordneten Fixierstiften 24 zusammenwirkt. Weiter sind dem zweiten Kupplungsteil 11 im Bereich seiner Flanschfläche 14 ein oder mehrere, im dargestellten Ausführungsbeispiel zwei Positionierbolzen 25 zugeordnet, die während des Koppelvorganges der beiden Kupplungsteile 10, 11 in das erste Kupplungsteil 10 durchsetzende Aufnahmebohrungen 26 eingreifen, sodass das zweite Kupplungsteil 11 mittels dieser Haltebolzen 25 auf einfache Weise und passgenau mit dem ersten Kupplungsteil 10 in Wirkverbindung gebracht werden kann.

In dem dargestellten Ausführungsbeispiel verfügt jedes Kupplungsteil 10, 11 über vier Hydraulikanschlüsse 27, wobei es im Rahmen der Erfindung liegt, hier eine beliebige Anzahl von Hydraulikanschlüssen 27 vorzusehen. Die Hydraulikanschlüsse 27 des zweiten Kupplungsteils 11 sind in an sich bekannter Weise über nicht näher beschriebene, dem ersten Kupplungsteil 10 zugeordnete Steckkupplungen 28 miteinander verbindbar. Die Hydraulikanschlüsse 27 sowie die Steckkupplungen 28 sind dabei so zueinander positioniert, dass in einem einzigen Kuppelvorgang alle dem Arbeitsgerät 3 zugeordneten Hydraulikleitungen 8 mit dem Hydraulikkreislauf des Trägerfahrzeugs 1 verbunden werden. Zugleich stützen die miteinander gekoppelten Hydraulikanschlüsse 27 und ihnen jeweils zugeordneten Steckkupplungen 28 das zweite Kupplungsteil 11 an dem ersten Kupplungsteil 10 ab. Die Verbindung der Schlauchleitungen 8 mit dem Hydraulikkreislauf des Trägerfahrzeugs 1 wird in der Regel dadurch bewirkt, dass das mit dem Trägerfahrzeug 1 drehfest verbundene erste Kupplungsteil 10 mit einem dem Trägerfahrzeug 1 zugeordneten Ventilblock 29 gekoppelt ist, der die Druckbeaufschlagung und Druckentlastung der einzelnen Hydraulikleitungen 8 regelt.

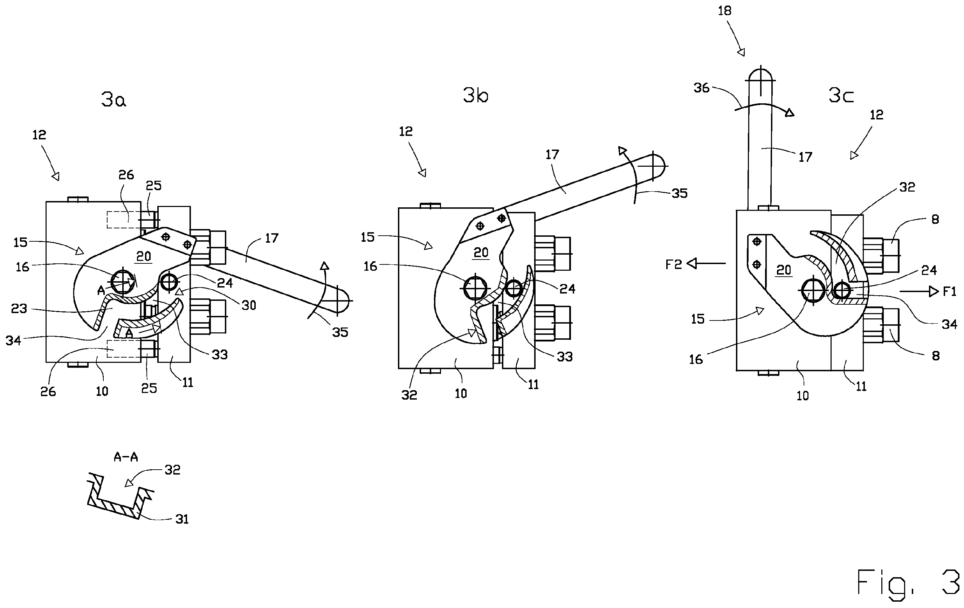

Figur 3 zeigt nun den Koppelvorgang des ersten und zweiten Kupplungsteils 10, 11 im Detail. Zunächst wir das zweite Kupplungsteil 11 gemäß Figur 3a so an das erste Kupplungsteil 10 herangeführt, dass die dem zweiten Kupplungsteil 11 zugeordneten Positionierbolzen 25 in die entsprechenden Aufnahmebohrungen 26 des ersten Kupplungsteils 10 eingreifen. Das zweite Kupplungsteil 11 wird dabei soweit an das erste Kupplungsteil 10 herangeführt, dass die Fixierstifte 24 des zweiten Kupplungsteils 11 an dem jeweiligen Verriegelungsflansch 20 der Arretiervorrichtung 15 anliegen. Dabei nimmt der Fixierstift 24 eine Position oberhalb des Eintrittsbereichs 30 der dem jeweiligen Verriegelungsflansch 20 zugeordneten, erfindungsgemäßen Kurvenbahn 23 ein. Damit der Fixierstift 24 beim Verschwenken der Verriegelungsflansche 20 um deren Schwenkachse 16 sicher innerhalb der Kurvenbahn 23 geführt werden, ist die Kurvenbahn 23 als untenseitig geöffnetes U-Profil 31 ausgeführt, sodass sich innerhalb dieses U-Profils 31 ein Führungskanal 32 der Kurvenbahn 23 ergibt, in welchem der jeweilige Fixierstift 24 geführt wird. Um die noch näher zu erläuternden Positionen der Fixierstifte 24 sicherzustellen, verfügt jede Kurvenbahn 23 und der von ihr gebildete Führungskanal 32 über einen im Eintrittsbereich 30 beginnenden kurvenförmigen Führungsbereich 33 und einen sich an diesen Führungsbereich 33 anschließenden linearen Freigabebereich 34.

Indem nun der Handhebel 17 gemäß Pfeilrichtung 35 in vertikaler Richtung bewegt wird, schwenken die Verriegelungsflansche 20 um ihre Schwenkachse 16 in eine beispielhaft in Figur 3b dargestellte Position, in welcher die Fixierstifte 24 durch den kurvenförmigen Führungsbereich 33 des Führungskanals 32 bewegt werden. Wegen der U-förmigen Gestalt 31 des Führungskanals 32 kann der Fixierstift 24 während der Bewegung durch den kurvenförmigen Führungsbereich 33 den Führungskanal 32 nicht verlassen, sodass während des Koppel- oder Entriegelungsvorganges der Kupplung 12 die ersten und zweiten Kupplungsteile 10, 11 wegen der formschlüssigen Führung in dem Führungskanal 32 zwangsweise aufeinander zu oder voneinander weg bewegt werden.

Indem der Handhebel 17 weiter gemäß Pfeilrichtung 35 in vertikaler Richtung verschwenkt wird gelangt er schließlich in die in Figur 3c dargestellt senkrechte Position. In dieser Position nimmt die Arretiervorrichtung 15 schließlich die Arretierposition 18 ein, in der die dem zweiten Kupplungsteil 11 zugeordneten Hydraulikanschlüsse 27 in den jeweiligen Steckkupplungen 28 einrasten. Durch das weitere Schwenken der Verriegelungsflansche 20 um ihre Schwenkachsen 16 gelangen die Fixierstifte 24 des zweiten Kupplungsteils 11 in den linearen Freigabebereich 34 des Führungskanals 32, wobei dieser lineare Freigabebereich 34 in der Arretierposition 18 horizontal ausgerichtete ist, sodass jeder Fixierstift 24 aus seinem Freigabebereich 34 herausbewegt werden kann. Übersteigt nun die Lösekraft F1 die im Wesentlichen von den Steckkupplungen 28 aufgebrachte Haltekraft F2 der beiden Kupplungsteile 10, 11, was regelmäßig dann der Fall ist, wenn sich das Trägerfahrzeug 1 von dem abgekoppelten Arbeitsgerät 3 entfernt, ohne das die Kupplung 20 geöffnet wurde, werden beide Kupplungsteile 10, 11 entkoppelt, ohne das die Hydraulikleitungen 8 einzeln von dem zweiten Kupplungsteil 11 abreißen und dabei unter Umständen beschädigt werden oder in der nähe befindliche Personen verletzen.

Zur Öffnung der Kupplung 12 wird schließlich der Handhebel 17 gemäß der in Figur 3c dargestellten Pfeilrichtung 36 in vertikaler Richtung nach unten verschwenkt. Dabei durchlaufen die Fixierstifte 24 den von der Kurvenbahn 23 gebildeten Führungskanal 32 in entgegengesetzter Richtung, sodass die Arretiervorrichtung 15 schließlich die dem zweiten Kupplungsteil 11 zugeordneten Fixierstifte 24 wieder freigibt, und das zweite Kupplungsteil 11 von dem ersten Kupplungsteil 10 entfernt werden kann.

In einer vorteilhaften Ausgestaltung der Erfindung können die in Figur 2 schematisch dargestellten Schlauchkupplungen 28 so dimensioniert sein, dass die Haltekraft jeder dieser Schlauchkupplungen 28 größer als die Lösekraft F1 der Kupplungsteile 10, 11 der Kupplung 12 ist. Zudem liegt es im Rahmen der Erfindung, dass das Trägerfahrzeug 1 als beliebiges land- oder forstwirtschaftliches Trägerfahrzeug 1, ausgeführt ist und das zweite Kupplungsteil 11 einem mit dem land- oder forstwirtschaftlichen Trägerfahrzeug 1 koppelbaren Arbeitsgerät 3 zugeordnet ist. Weiter kann das Trägerfahrzeug 1 auch als Baumaschine ausgeführt und das zweite Kupplungsteil 11 einem mit der Baumaschine koppelbaren Arbeitsgerät zugeordnet sein.

**Bezugszeichenliste:**

| | | | |
|---|---|---|---|
| 1 | Trägerfahrzeug | 31 | U-Profil |
| 2 | Traktor | 32 | Führungskanal |
| 3 | landwirtschaftliches Arbeitsgerät | 33 | Führungsbereich |
| 4 | Zugmaul | 34 | Freigabebereich |
| 5 | Dreipunktanbau | 35 | Pfeilrichtung |
| 6 | mechanischer Antriebsstrang | 36 | Pfeilrichtung |
| 7 | elektrischer Antriebsstrang | | |
| 8 | hydraulischer Antriebsstrang | | |
| 9 | Zapfwelle | | |
| 10 | erstes Kupplungsteil | | |
| 11 | zweites Kupplungsteil | | |
| 12 | Kupplung | | |
| 13 | Flanschfläche | F1 | Lösekraft |
| 14 | Flanschfläche | F2 | Haltekraft |
| 15 | Arretiervorrichtung | | |
| 16 | Schwenkachse | | |
| 17 | Handhebel | | |
| 18 | Arretierposition | | |
| 19 | Entriegelungsposition | | |
| 20 | Verriegelungsflansch | | |
| 21 | Schraubverbindung | | |
| 22 | Sicherungsstift | | |
| 23 | Kurvenbahn | | |
| 24 | Fixierstift | | |
| 25 | Positionierbolzen | | |
| 26 | Aufnahmebohrung | | |
| 27 | Hydraulikanschluss | | |
| 28 | Steckkupplung | | |
| 29 | Ventilblock | | |
| 30 | Eintrittsbereich | | |

## Patentansprüche

1. Kupplung zum Verbinden von Hydraulikleitungen mit einem ersten, mit dem Trägerfahrzeug verbundenen Kupplungsteil (10) und einem mit dem ersten Kupplungsteil (10) verbindbaren zweiten Kupplungsteil (11) einer dem ersten Kupplungsteil (10) zugeordneten Arretiervorrichtung (15) und zumindest einem dem zweiten Kupplungsteil (11) zugeordneten, mit der Arretiervorrichtung (15) in Eingriff bringbaren Fixierstift (24), der während der Kupplung des ersten und zweiten Kupplungsteils (10,11) in einer der Arretiervorrichtung (15) zugeordneten Kurvenbahn (23) geführt wird, **dadurch gekennzeichnet, dass** der zumindest eine Fixierstift (24) in der Arretierposition (18) von der Kurvenbahn (23) freigegeben wird.

2. Kupplung zum Verbinden von Hydraulikleitungen nach Anspruch 1,
**dadurch gekennzeichnet,**
**dass** dem zweiten Kupplungsteil (11) ein oder mehrere Positionierbolzen (25) zugeordnet sind, die mit Aufnahmebohrungen (26) des ersten Kupplungsteils (10) derart zusammenwirken, dass das erste Kupplungsteil (10) und das zweite Kupplungsteil (11) positionsgenau miteinander gekoppelt werden können.

3. Kupplung zum Verbinden von Hydraulikleitungen nach einem der vorhergehenden Ansprüche,
**dadurch gekennzeichnet,**
**dass** die der Arretiervorrichtung (15) zugeordnete Kurvenbahn (23) einen kurvenförmigen Führungsbereich (33) und einen linearen Freigabebereich (34) umfasst.

4. Kupplung zum Verbinden von Hydraulikleitungen nach Anspruch 3,
**dadurch gekennzeichnet,**
**dass** die Kurvenbahn (23) als einseitig geöffnetes, einen Führungskanal (32) bildendes U-Profil (31) ausgestaltet ist.

5. Kupplung zum Verbinden von Hydraulikleitungen nach einem der vorhergehenden Ansprüche,
**dadurch gekennzeichnet,**
**dass** die Arretiervorrichtung (15) zur Auslösung des Arretiervorganges und zum Lösen der ersten und zweiten Kupplungsteile (10, 11) mittels Handhebel (17) von der Entriegelungsposition (19) in die Arretierposition (18) und umgekehrt verschwenkbar ist.

6. Kupplung zum Verbinden von Hydraulikleitungen nach einem der vorhergehenden Ansprüche,
**dadurch gekennzeichnet,**
**dass** die Arretiervorrichtung (15) erste und zweite Verriegelungsflansche (20) umfasst und jeder Verriegelungsflansch (20) eine Kurvenbahn (23) aufnimmt, wobei jeder Verriegelungsflansch (20) einem Seitenbereich des ersten Kupplungsteils (10) drehbar zugeordnet ist und jeweils mit einem den Seitenbereichen des zweiten Kupplungsteils (11) zugeordneten Fixierstift (24) in Wirkverbindung bringbar ist.

7. Kupplung zum Verbinden von Hydraulikleitungen nach einem der vorhergehenden Ansprüche,
**dadurch gekennzeichnet,**
**dass** die ersten und zweiten Kupplungsteile (10, 11) eine Vielzahl von Schlauchleitungen (8) aufnehmen.

8. Kupplung zum Verbinden von Hydraulikleitungen nach Anspruch 7,
**dadurch gekennzeichnet,**
**dass** die Schlauchleitungen (8) über Hydraulikanschlüsse (27) mit dem zweiten Kupplungsteil (11) verbundnen sind und diese Hydraulikanschlüsse (27) mit den dem ersten Kupplungsteil (10) zugeordneten Steckkupplungen (28) gekoppelt werden.

9. Kupplung zum Verbinden von Hydraulikleitungen nach einem der vorhergehenden Ansprüche,
**dadurch gekennzeichnet,**
**dass** die Haltekraft (F2) jeder der den Hydraulikleitungen (8) zugeordneten Steckkupplungen (28) so dimensioniert ist, dass sie größer als die Lösekraft (F1) des zweiten Kupplungsteils (11) vom ersten Kupplungsteil (10) ist.

10. Kupplung zum Verbinden von Hydraulikleitungen nach einem der vorhergehenden Ansprüche,
**dadurch gekennzeichnet,**
**dass** zumindest einem der Verriegelungsflansche (20) der Arretiervorrichtung (15) in der Arretierposition (18) ein Sicherungsstift (22) zugeordnet ist.

11. Kupplung zum Verbinden von Hydraulikleitungen nach Anspruch 10,
**dadurch gekennzeichnet,**
**dass** der Sicherungsstift (22) entfernbar ist.

12. Kupplung zum Verbinden von Hydraulikleitungen nach einem der vorhergehenden Ansprüche,
**dadurch gekennzeichnet,**
**dass** das Trägerfahrzeug (1) als land- oder forstwirtschaftliches Trägerfahrzeug, vorzugsweise Traktor (2), ausgeführt ist und das zweite Kupplungsteil (11) einem mit dem land- oder forstwirtschaftlichen Trägerfahrzeug (1) koppelbaren Arbeitsgerät (3) zugeordnet ist.

13. Kupplung zum Verbinden von Hydraulikleitungen nach einem der Anprüche 1-12,
**dadurch gekennzeichnet,**
**dass** das Trägerfahrzeug (1) als Baumaschine ausgeführt ist und das zweite Kupplungsteil (11) einem mit der Baumaschine koppelbaren Arbeitsgerät (3) zugeordnet ist.

## Claims

1. A coupling for connecting hydraulic lines comprising a first coupling portion (10) connected to the carrier vehicle and a second coupling portion (11) which can be connected to the first coupling portion (10), an arresting device (15) associated with the first coupling portion (10), and at least one fixing pin (24) which is associated with the second coupling portion (11) and which can be brought into engagement with the arresting device (15) and which during coupling of the first and second coupling portions (10, 11) is guided in a curved path (23) associated with the arresting device (15), **characterised in that** the at least one fixing pin (24) is released from the curved path (23) in the arresting position (18).

2. A coupling for connecting hydraulic lines according to claim 1 **characterised in that** associated with the second coupling portion (11) are one or more positioning studs (25) cooperating with receiving bores (26) in the first coupling portion (10) in such a way that the first coupling portion (10) and the second coupling portion (11) can be coupled together in accurately positioned relationship.

3. A coupling for connecting hydraulic lines according to one of the preceding claims **characterised in that** the curved path (23) associated with the arresting device (15) includes a curve-shaped guide region (33) and a linear release region (34).

4. A coupling for connecting hydraulic lines according to claim 3 **characterised in that** the curved path (23) is in the form of a U-shaped profile (31) which is open at one side and forms a guide passage (32).

5. A coupling for connecting hydraulic lines according to one of the preceding claims **characterised in that** the arresting device (15) for triggering the arresting operation and for releasing the first and second coupling portions (10, 11) is pivotable by means of a hand lever from the unlocking position (19) into the arresting position (18) and vice-versa.

6. A coupling for connecting hydraulic lines according to one of the preceding claims **characterised in that** the arresting device (15) includes first and second locking flanges (20) and each locking flange (20) accommodates a curved path (23), wherein each locking flange (20) is rotatably associated with a side region of the first coupling portion (10) and can be brought into operative connecting relationship respectively with a fixing pin (24) associated with the side regions of the second coupling portion (11).

7. A coupling for connecting hydraulic lines according to one of the preceding claims **characterised in that** the first and second coupling portions (10, 11) accommodate a plurality of hose lines (8).

8. A coupling for connecting hydraulic lines according to claim 7 **characterised in that** the hose lines (8) are connected to the second coupling portion (11) by way of hydraulic connections (27) and said hydraulic connections (27) are coupled to the plug couplings (28) associated with the first coupling portion (10).

9. A coupling for connecting hydraulic lines according to one of the preceding claims **characterised in that** the holding force (F2) of each of the plug couplings (28) associated with the hydraulic lines (8) is so dimensioned that it is greater than the release force (F1) of the second coupling portion (11) from the first coupling portion (10).

10. A coupling for connecting hydraulic lines according to one of the preceding claims **characterised in that** a securing pin (22) is associated with at least one of the locking flanges (20) of the arresting device (15) in the arresting position (18).

11. A coupling for connecting hydraulic lines according to claim 10 **characterised in that** the securing pin (22) is removable.

12. A coupling for connecting hydraulic lines according to one of the preceding claims **characterised in that** the carrier vehicle (1) is in the form of an agricultural or forestry carrier vehicle, preferably a tractor (2), and the second coupling portion (11) is associated with a working implement (3) which can be coupled to the agricultural or forestry carrier vehicle (1).

13. A coupling for connecting hydraulic lines according to one of claims 1 to 12 **characterised in that** the carrier vehicle (1) is in the form of a construction machine and the second coupling portion (11) is associated with a working implement (3) which can be coupled to the construction machine.

## Revendications

1. Accouplement pour relier des conduites hydrauliques, comprenant une première partie d'accouplement (10) reliée au véhicule porteur et une seconde partie d'accouplement (11) pouvant être reliée à la première partie d'accouplement (10), comprenant un dispositif de blocage (15) associé à la première partie d'accouplement (10), et comprenant au moins une broche de blocage (24) qui est associée à la seconde partie d'accouplement (11) et peut être amenée en prise avec le dispositif de blocage (15) et qui, lors de l'accouplement des première et seconde parties d'accouplement (10, 11), est guidée dans une rampe incurvée (23) associée au dispositif de blocage (15), **caractérisé en ce que**, dans la position de blocage (18), la au moins une broche de blocage (24) est libérée par la rampe incurvée (23).

2. Accouplement pour relier des conduites hydrauliques selon la revendication 1, **caractérisé en ce qu'**à la seconde partie d'accouplement (11) sont associées une ou plusieurs tiges de positionnement (25) qui coopèrent avec des trous récepteurs (26) de la première partie d'accouplement (10), de sorte que la première partie d'accouplement (10) et la seconde partie d'accouplement (11) peuvent être accouplées l'une à l'autre avec un positionnement précis.

3. Accouplement pour relier des conduites hydrauliques selon une des revendications précédentes, **caractérisé en ce que** la rampe incurvée (23) associée au dispositif de blocage (15) comporte une zone de guidage curviligne (33) et une zone de libération rectiligne (34).

4. Accouplement pour relier des conduites hydrauliques selon la revendication 3, **caractérisé en ce que** la rampe incurvée (23) est conçue sous la forme d'un profil en U (31) ouvert d'un côté, formant un canal de guidage (32).

5. Accouplement pour relier des conduites hydrauliques selon une des revendications précédentes, **caractérisé en ce que**, pour déclencher l'opération de blocage et pour désolidariser les première et seconde parties d'accouplement (10, 11), le dispositif de blocage (15) peut être basculé au moyen d'un levier manuel (17) de la position déverrouillée (19) vers la position de blocage (18) et inversement.

6. Accouplement pour relier des conduites hydrauliques selon une des revendications précédentes, **caractérisé en ce que** le dispositif de blocage (15) comporte des première et seconde brides de verrouillage (20), et chaque bride de verrouillage (20) comporte une rampe incurvée (23), chaque bride de verrouillage (20) étant associée en rotation à une zone latérale de la première partie d'accouplement (10) et pouvant être amenée en liaison active avec une broche de blocage (24) associée à chacune des zones latérales de la seconde partie d'accouplement (11).

7. Accouplement pour relier des conduites hydrauliques selon une des revendications précédentes, **caractérisé en ce que** les première et seconde parties d'accouplement (10, 11) comportent une pluralité de conduites flexibles (8).

8. Accouplement pour relier des conduites hydrauliques selon la revendication 7, **caractérisé en ce que** les conduites flexibles (8) sont reliées à la seconde partie d'accouplement (11) par l'intermédiaire de raccords hydrauliques (27), et ces raccords hydrauliques (27) sont accouplés avec les prises d'accouplement (28) associées à la première partie d'accouplement (10).

9. Accouplement pour relier des conduites hydrauliques selon une des revendications précédentes, **caractérisé en ce que** la force de retenue (F2) de chacune des prises d'accouplement (28) associée aux conduites hydrauliques (8) est calculée de façon à être supérieure à la force de retrait (F1) de la seconde partie d'accouplement (11) hors de la première partie d'accouplement (10).

10. Accouplement pour relier des conduites hydrauliques selon une des revendications précédentes, **caractérisé en ce que**, dans la position de blocage (18), une broche d'arrêt (22) est associée à au moins une des brides de verrouillage (20) du dispositif de blocage (15).

11. Accouplement pour relier des conduites hydrauliques selon la revendication 10, **caractérisé en ce que** la broche d'arrêt (22) est amovible.

12. Accouplement pour relier des conduites hydrauliques selon une des revendications précédentes, **caractérisé en ce que** le véhicule porteur (1) est conçu sous la forme d'un véhicule porteur agricole ou forestier, de préférence d'un tracteur (2), et la seconde partie d'accouplement (11) est associée à un outil de travail (3) pouvant être accouplé au véhicule porteur agricole ou forestier (1).

13. Accouplement pour relier des conduites hydrauliques selon une des revendications 1 à 12, **caractérisé en ce que** le véhicule porteur (1) est conçu sous la forme d'un engin de chantier, et la seconde partie d'accouplement (11) est associée à un outil de travail (3) pouvant être accouplé à l'engin de chantier.
